# EUROPEAN PATENT SPECIFICATION

(11) **EP 2 350 795 B1**
(45) Date of publication and mention of the grant of the patent: **05.04.2017**
(21) Application number: 09752762.6
(22) Date of filing: 09.10.2009
(51) Int. Cl.: G06F 3/043

(54) **TOUCH SENSOR AND METHOD FOR DETERMINING THE POSITION OF A TOUCH**
BERÜHRUNGSSENSOR UND VERFAHREN ZUR BESTIMMUNG DER POSITION EINER BERÜHRUNG
CAPTEUR TACTILE ET PROCÉDÉ DE DÉTERMINATION DE LA POSITION D'UN CONTACT

(30) Priority: 14.10.2008 DE 102008051194
(43) Date of publication of application: 03.08.2011
(73) Proprietor: Hochschule für angewandte Wissenschaften Fachhochschule Coburg, 96450 Coburg (DE)
(72) Inventor: LINDNER, Gerhard, 96450 Coburg (DE); MÜNCH, Michael, 96450 Coburg (DE); TRITT, Gerhard, 72218 Wildberg (DE); BUCHHOLZ, Andreas, 75365 Calw (DE)
(74) Representative: Maikowski & Ninnemann Patentanwälte Partnerschaft mbB
(86) International application number: PCT/EP2009/063209
(87) International publication number: WO 2010/043572

(56) References cited:
- EP-A- 1 376 871
- WO-A-03/005292
- JP-A- 8 297 534

## Description

The invention relates to a touch sensor according to claim 1 and a method for determining the position of a touch according to claim 15.

Touch sensors in the form of touch panels are known from the prior art. Generally, these known touch panels comprise a touch sensitive plate or screen allowing to determine the position of a touch on the plate or screen. Further, a touch panel can be used as input device for inputting data to an electronic device such as a computer. For example, a set of different characters can be assigned to different positions on the touch panel such that a touch on a certain surface area on the touch panel will be interpreted as a selection of the assigned character.

Document JP 08305481 A discloses a touch panel based on the generation of surface acoustic waves in a panel, wherein the surface acoustic waves are modified by a touch on the panel such that the position of the touch can be determined by detecting the acoustic waves using a receiver and evaluating an electrical signal created by the receiver upon receipt of the surface acoustic waves. Further, EP 1 376 871 A1 describes an input device including a source for emitting acoustic waves and a receiver for detecting acoustic waves.

It is an object of the present invention to provide a more versatile acoustic wave touch sensor in particular in respect to capabilities as a switching element for technical devices.

According to the invention a touch sensor is provided, comprising:
- a substrate having a touch surface configured to be touched by a user;
- at least one transmitter for exciting acoustic waves in the substrate;
- a plurality of reflecting structures arranged across the surface for reflecting acoustic waves excited in the substrate;
- at least one receiver for receiving acoustic waves evoked by the transmitter and, for example, reflected at at least one of the reflecting structures, wherein
   - the reflecting structures and the receiver are arranged relative to one another in such a way that an acoustic wave excited by the transmitter in the substrate is reflected at the reflecting structures toward the receiver, and
   - if the surface is touched by a body part of the user or a touching means operated by the user at least a part of the acoustic wave energy excited in the substrate is converted into volume sound waves in the body part or the material of the touching means thereby modifying the acoustic waves propagating in the substrate;
   - evaluating means for determining the position of a touch on the touch surface using a signal generated by the receiver upon receipt of acoustic waves evoked by the transmitter,
   - wherein each of the reflecting structures is configured to generate a reflected acoustic wave if the touch surface of the substrate is not touched, wherein the evaluating means are configured to detect a touch on a segment of the touch surface between two adjacent reflecting structures using the signal generated by the receiver.

The touch sensor is thus based on the principle that acoustic waves excited in the substrate can be converted into volume sound waves if the substrate is brought into contact with a material that has a lower sound velocity than the velocity of the acoustic waves excited in the substrate. For example, if a body part (for example, a tip of a finger) of a user, i.e. human tissue, is brought into contact with the touch surface of the substrate at least a part of the (surface) acoustic waves excited in the substrate will be transferred from the substrate into the body part such that the energy of the acoustic wave in the substrate is reduced and the signal generated by the receiver upon receipt of acoustic waves in the substrate is modified. Of course, the touch surface has not necessarily to be touched by a body part of a user. Instead of directly touching the touch surface of the sensor touching means as, for example, a pen made of a suited material (such as plastic) could be used.

In particular, the touch sensor is configured in such a way that each of the reflecting structures creates a distinct reflection signal at the receiver, wherein, for example, the transmitter excites an acoustic wave pulse and - if the touch surface of the substrate is not touched - each of the reflecting structures generates a reflected pulse which will be detected by the receiver. The different path lengths from the transmitter to the different reflecting structures result in different time delays between the transmission of the excitation pulse and the receipt of the reflected acoustic pulses at the receiver such that, for example, the reflected wave pulses corresponding to the different reflecting structures arrive at the receiver consecutively.

As mentioned above, if the touch surface is touched a part or the total energy of acoustic waves in the substrate is transferred from the substrate into the touching body part or touching means such that reflecting structures lying behind (along the propagating direction of the excited acoustic waves) the area of the touch will not be reached by the acoustic wave or will only by reached by an attenuated wave. Therefore, at least some of the receiver signals corresponding to the reflecting structures lying behind the touch area will be missing or will be lower such that a touch contact on the touch surface creates an individual "fingerprint" in the receiver signal, this fingerprint permitting to identify the position of the touch on the touch surface.

According to an embodiment of the invention, the transmitter and the receiver are formed as a common transmitter-receiver unit and the reflecting structures are arranged in such a way that an acoustic wave transmitted by the transmitter-receiver unit impacts essentially perpendicularly on the reflecting structures and is reflected back to the transmitter-receiver unit. In particular, the common transmitter-receiver unit comprises an interdigital transducer which can be operated alternatingly as transmitter and receiver. In other words, the combined transmitter-receiver unit may be alternatingly operated as a transmitter during a first period of time and as a receiver during a second period of time.

In another example, two common transmitter-receiver units are arranged opposite to one another along the propagating direction of the acoustic waves created in the substrate by the transmitter-receiver units. Thus, the reflecting structures are impacted by waves under two opposite directions thereby generating reflected waves propagating in opposite directions allowing a more precise determination of a touch position.

However, the invention is not restricted to the use of a common transmitter-receiver unit as a transmitter separate from the receiver could equally be employed. Also, the term "transmitter" is of course not restricted to a piezo-electric transducer. Other embodiments of the invention comprise a transmitter in the form of a (e.g. pulsed) laser that excites the acoustic wave in the substrate of the touch sensor based on thermoelastic effects. Also, a wedge ("wedge converter") could be used (in particular in combination with a piezo-electric transducer) to excite the acoustic waves or a comb-like vibrator ("comb converter"). Of course more than one transmitter and more than one receiver can be provided. Moreover, different transmitter types could also be used in combination. In particular, the transmitter may be configured to excite directed acoustic waves that may also be focused to some extent.

In another example of the invention, the reflecting structures are arranged in an array, i.e. the structures are arranged in a plurality of rows and columns, wherein, in particular, the distance between two adjacent reflecting structures of a row and/or a column is essentially constant. For example, reflecting structures could be distributed across the complete touch surface such that the whole touch surface is usable.

The reflecting structures may extend essentially longitudinally and/or parallel to one another. For example, the reflecting structures are formed as edges, bars and/or recesses of the substrate. However, the invention is not limited to a particular embodiment of the reflecting structures. Rather, a suited reflecting structure only has to be able to modify the acoustic properties of its surroundings. For this, additional interfaces can be introduced (as in the case of recesses in the substrate) and/or a different material could be incorporated in/or on the substrate. However, it is also possible to arrange reflecting structures of the same material as the substrate, these reflecting structures being configured to provide a local modification of the acoustic properties of the substrate, for example bars on top of the touch surface as mentioned above.

According to another embodiment of the invention, the reflecting structures are arranged on and/or in the touch surface of the substrate, whereas, for example, the transmitter and the receiver are arranged on a surface of the substrate that faces away from the touch surface. In another example, the reflecting structures are arranged on a surface of the substrate that faces away from the touch surface and/or are formed as recesses in a surface of the substrate that faces away from the touch surface. Also, reflecting structures could be arranged on both sides of the structure.

In particular, the transmitter is configured to excite concurrent acoustic waves in the substrate such as Lamb or Lamb-Rayleigh waves. In the case of Lamb waves or Lamb-Rayleigh-waves the displacement of opposite surfaces of the substrate excited by the transmitter is correlated such that, in particular, the amplitude and/or the phases of the displacement movement of the touch surface and the substrate surface facing away from the touch surface are interrelated.

In order to create Lamb waves or Lamb-Rayleigh-waves in the substrate, the substrate thickness and a frequency of the excited waves in the substrate have to be chosen in dependence of the acoustic dispersion properties of the substrate. For example, the acoustic waves excited in the substrate will be mainly or only Lamb waves if the thickness of the substrate is substantially smaller than the wavelength of the excited waves. However, as mentioned above, also a transition type of Lamb waves and Rayleigh waves can be used, i.e. the thickness of the substrate can be of the same order of magnitude as the wavelength of the excited waves. In that case there can still be a correlation between the displacement movement of the opposite surfaces of the structure (e.g. of the outer atomic layers of the surfaces of the structure).

According to another example, the substrate comprises (or consists of) a non piezoelectric material such as metal, plastic and/or glass.

Also, the substrate of the touch sensor can be mounted to a holder, wherein the transmitter and the receiver may be received in a recess of the holder. In particular, the transmitter and the receiver are arranged on the surface of the substrate facing away from the touch surface. Thus, the transmitter and the receiver are protected within the recess of the holder, whereas the touch surface is accessible from the outside. In an example, the substrate is mounted to the holder using an elastic material, for example an adhesive.

In another embodiment of the invention, the distance between two neighbouring reflecting structures is larger than approximately 0.5 cm. For example, the distance between neighbouring reflecting structures is chosen in such a way that a human finger fits into the space between two neighbouring reflecting structures. It is, however, noted that it is not necessary that a finger tip of a typical user "fits" into the space between two reflecting structures to be detected. Rather, also an intermediate touch position where a finger tip (or another touching means) at least partly covers one of the reflecting structures could be accurately determined with the touch sensor according to the invention as will be explained further below.

The invention also relates to a method for determining the position of a touch, the method comprising the steps of:
- providing a substrate having a touch surface configured to be touched by a user;
- providing at least one transmitter for exciting acoustic waves in the substrate;
- providing a plurality of reflecting structures arranged across the touch surface, wherein each of the reflecting structures is configured to generate a reflected acoustic wave if the touch surface of the substrate is not touched;
- providing at least one receiver for receiving acoustic waves evoked by the transmitter arranged relative to the reflecting structures in such a way that an acoustic wave excited in the substrate by the transmitter is reflected at the reflecting structures toward the receiver,
- touching a segment of the touch surface between two adjacent reflecting structures by a body part of the user or a touching means operated by the user, thereby converting at least a part of the acoustic wave energy excited in the substrate into volume sound waves in the body part or the material of the touching means and thereby modifying the acoustic waves propagating in the substrate;
- determining the position of the touch by evaluating a signal generated by the receiver upon receipt of acoustic waves evoked by the transmitter; and
- determining the segment of the touch surface where the touch took place using the signal generated by the receiver.

In particular, evaluating a signal generated by the receiver comprises evaluating the amplitude and the time response of the signal. Evaluating the "time response" includes determining the time delay between the excitation of an acoustic wave (e.g. a wave pulse) in the substrate and the occurrence of an acoustic wave (in particular of a reflected wave) at the receiver.

Embodiments of the invention will be described in more detail hereinafter with respect to the drawings, in which:
- Fig. 1: illustrates a touch sensor according to an embodiment of the invention;
- Fig. 2: illustrates the touch sensor of Figure 1, wherein a touch surface of the sensor is touched at a first position;
- Fig. 3: corresponds to the previous Figures, wherein, however, the touch surface is touched at a second position;
- Fig. 4: corresponds to to the previous Figures, wherein, however, the touch surface is touched at a third position;
- Fig. 5: corresponds to the previous Figures, wherein the touch surface is touched at a fourth position;
- Fig. 6: corresponds to the previous Figures, wherein, however, the touch surface is touched at two different positions at the same time;
- Fig. 7: shows a touch sensor according to another embodiment of the invention in top view;
- Fig. 8: corresponds to Figure 7, wherein, however, three different touch positions are illustrated; and
- Fig. 9: corresponds to Figures 7 and 8, wherein, however, three further touch positions are illustrated.

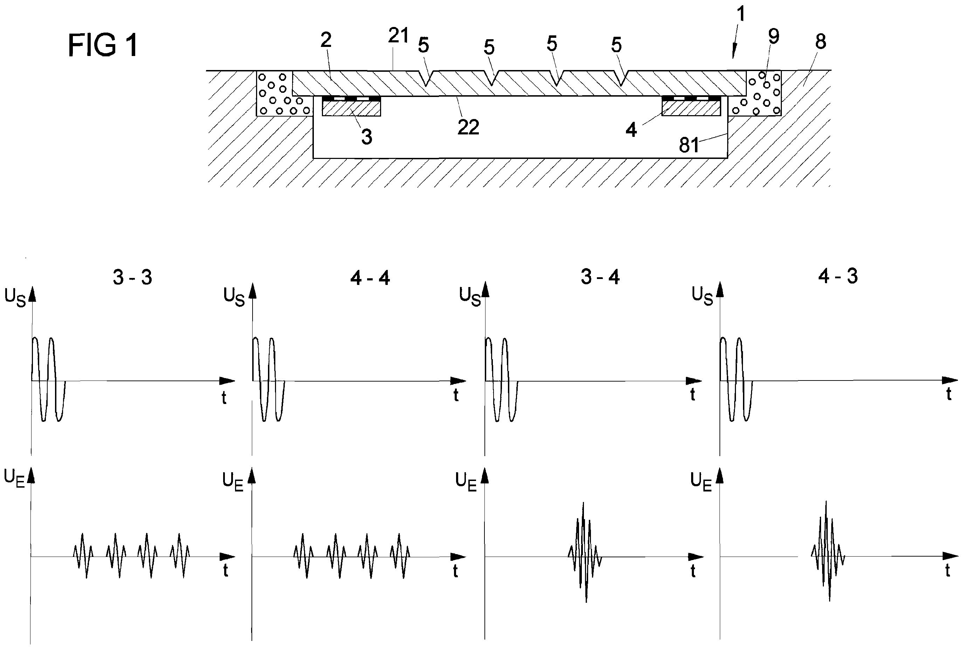

Figure 1 depicts a touch sensor 1 which comprises a substrate 2 having a touch surface 21 that is configured to be touched by a user (not shown). The substrate 2 is mounted to a touch substrate holder 8 via an elastic material 9.

Further, the touch sensor 1 comprises two transmitter-receiver units 3, 4 arranged on a surface 22 of substrate 2 which faces away from the touch surface 21. A recess 81 is provided within the holder 8 for receiving the transmitter-receiver units 3, 4. Each of these transmitter-receiver units 3, 4 can be alternatingly operated as transmitters for exciting acoustic waves in the substrate 2 and as receivers for receiving acoustic waves propagating in the substrate. For example, the transmitter-receiver units 3, 4 are interdigital transducers which are alternatingly operated as transmitters for a first period of time and as receivers for a second period of time.

Further, a plurality of reflecting structures 5 in the form of recesses are provided in the touch surface 21. More particularly, the reflecting structures 5 comprise two sidewalls running obliquely with respect to the touch surface 21, each of the sidewalls providing a reflecting surface. In particular, the reflecting structures possess a wedge like (triangular) cross section and extend essentially longitudinally and parallel to one another. Of course, other geometries (in particular other cross sections) of the reflecting structures are conceivable, for example, a rectangular cross section. Also, instead of recess structures projecting structures (such as bars) arranged on top of the touch surface 21 could be used to provide reflecting structures.

The transmitter-receiver units 3, 4 are disposed opposite to one another (along the propagating direction of the induced acoustic waves) such that a wave excited by one of the transmitter-receiver units 3, 4 and partially passing the reflecting structures can be received by the other transmitter-receiver unit. Further, the reflecting structures are arranged in such a way relative to the transmitter-receiver units 3, 4 that the excited waves impact on the reflecting structures essentially perpendicularly. Consequently, the reflected waves also propagate perpendicular to the reflecting structures such that they can be received by the corresponding transmitter-receiver units 3, 4.

Figure 1 further contains several graphs (below the illustration of the touch sensor) illustrating the working principle of the embodiment. The first row of the graphs illustrates the signal applied to the transmitter part of the units 3, 4, which generates an acoustic wave pulse in the substrate 2. The second row of curves illustrates the receiver response of the transmitter-receiver units 3, 4 for different situations.

For example, the first left graphs (labelled "3-3") relate to the situation that the (left) transmitter-receiver unit 3 excites a wave pulse in the substrate which is reflected at the reflecting structures 5 and the thereby generated reflected acoustic pulses are registered by the same transmitter-receiver unit 3. As can be seen from the lower graph, four distinct acoustic pulses are received at the transmitter-receiver unit 3 corresponding to the four different distances of the reflecting structures 5 from the transmitterr-receiver unit 3, wherein the acoustic wave pulse generated by reflection at the most distanced reflecting structure arrives latest at the transmitter-receiver unit 3.

The second left illustration (labelled "4-4") illustrates a similar situation with respect to the other transmitter-receiver unit 4. Similarly to the "3-3" case four distinct wave pulses arrive at transmitter-receiver unit 4 resulting from consecutive reflections at the four reflecting structures 5. It is noted that it is also possible that more than four reflection signals occur due to multiple reflections at the reflecting structures. Also, the amplitude of the reflection signals might be different due to the different path length (i.e. due to different absorption paths).

The second right illustration relates to the situation that the (left) transmitter-receiver unit 3 emits a wave pulse which is received by the (right) transmitter-receiver unit 4. In that case, the transmitted wave pulse is attenuated by the reflecting structures 5 (i.e. a part of the wave energy is reflected creating the reflection pulses illustrated in graphs "3-3" and "3-4" ). However, a part of the wave energy passes the reflecting structures such that an acoustic wave pulse arrives at the transmitter-receiver unit 4. Similarly, a wave pulse emitted by the (right) transmitter-receiver unit 4 is registered at the transmitter-receiver-unit 3 (right illustration labelled "4-3"). Of course, a superposition of the reflection pulses illustrated in graphs "3-3" and "4-4" and the pulse passing the reflecting structures may occur at the transmitter-receiver units 3, 4.

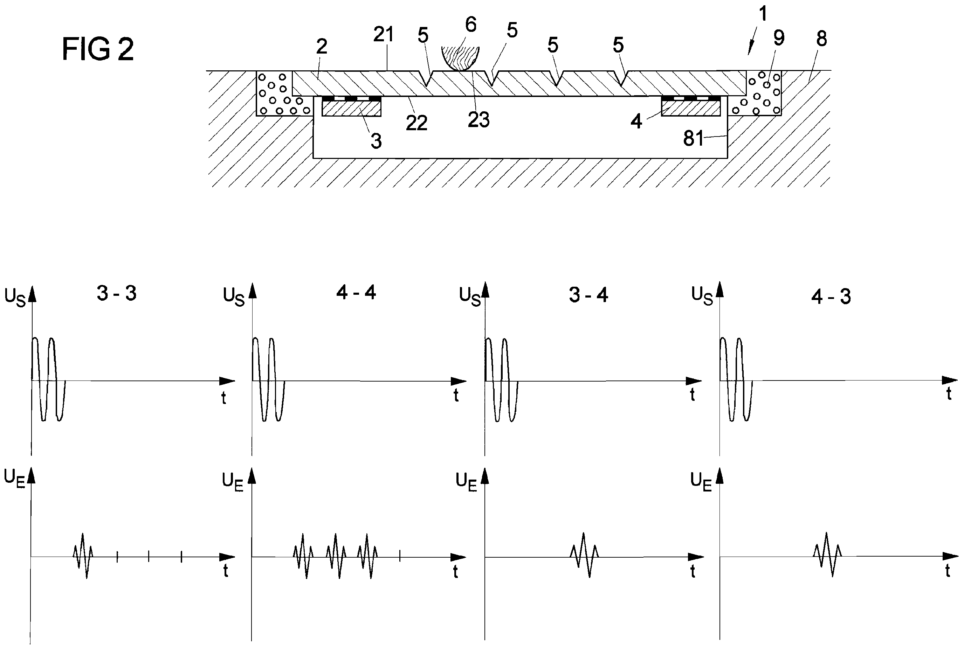

The acoustic waves arriving at the transmitter-receiver units 3, 4 are modified if the touch surface 21 is brought into contact with another material such as human tissue. This situation is shown in Figure 2, wherein a finger tip 6 is brought into contact with a segment 23 of the touch surface 21 between two reflecting structures 5.

Similar to Figure 1, four different situations are contemplated. Firstly, if a wave pulse is generated by the left transmitter-receiver unit 3 the acoustic pulse excited in the substrate 2 will be at least partially converted into volume sound energy in the tissue material of the finger tip 6. Thus, as illustrated in graph "3-3" the signal generated by the receiver part of the transmitter-receiver units 3 only comprises a first wave pulses resulting from reflection at the reflecting structure less distanced from the transmitter-receiver unit 3.

The other reflection pulses (as depicted in the corresponding graph "3-3" of Figure 1) are missing as the wave energy is transferred from the substrate at the touch location such that the excited wave pulse does not reach the reflecting structures behind the touch location. Of course, the part of the wave energy that is not converted into sound energy will pass the touch location and may be reflected at the remaining reflecting portions. However, as the reflected waves on their way to the transmitter-receiver unit 3 pass the touch location again, the amplitudes of the reflected waves arriving at the transmitter-receiver units 3 will be small. These reflected pulses are not shown in graph "3-3".

Correspondingly, an acoustic wave pulse emitted by the right transmitter-receiver unit 4 will provoke three reflection pulses and only the "latest" reflection pulse will be missing in the receiver signal (as shown in graph "4-4").

The non reflected part of the excited wave pulses (graphs "3-4" and "4-3") is again registered at the respective opposite transmitter-receiver unit. However, the passing pulses are attenuated due to the loss of wave energy at the location of the finger tip 6.

Thus, the touch by the finger tip creates a characteristic "fingerprint" in the receiver signal which allows the unambiguous determination of the position of the touch. In the present case, for example, it can be determined that the touch took place within segment 23. Thus, by evaluating the receiver signals generated by the transmitter-receiver units 3, 4 the position of the touch can be determined and if, for example, data (such as a symbol or character) is assigned to that touch position the character could be transmitted to an electronic device (e.g. a computer, a control or a display).

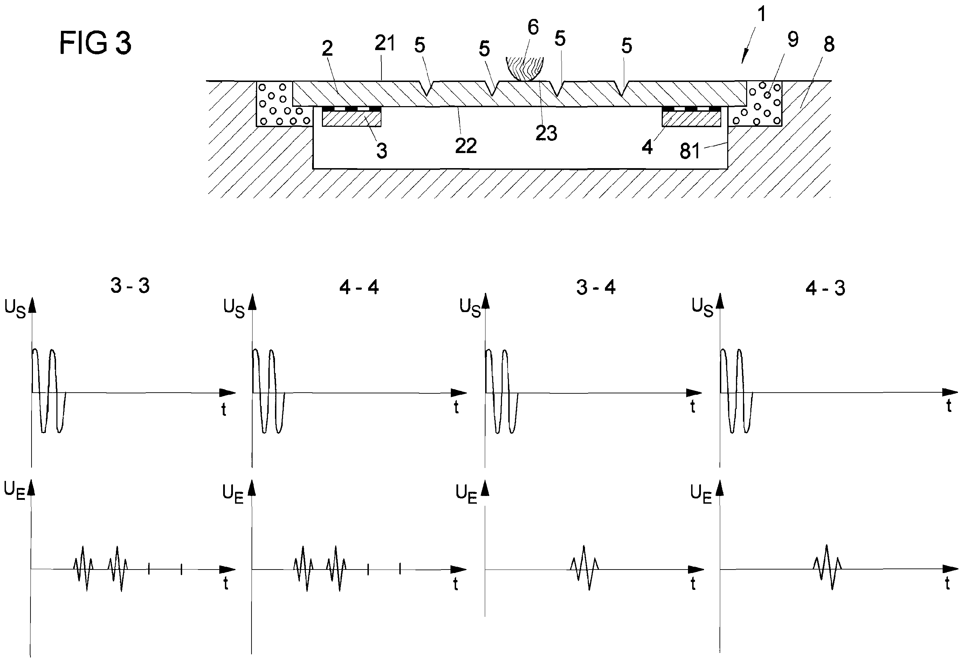

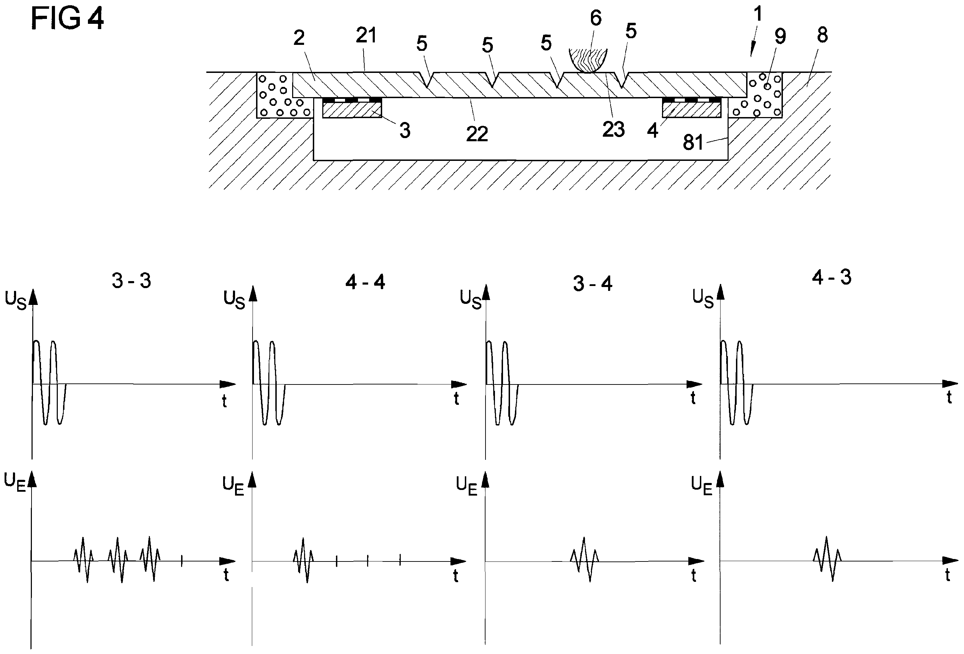

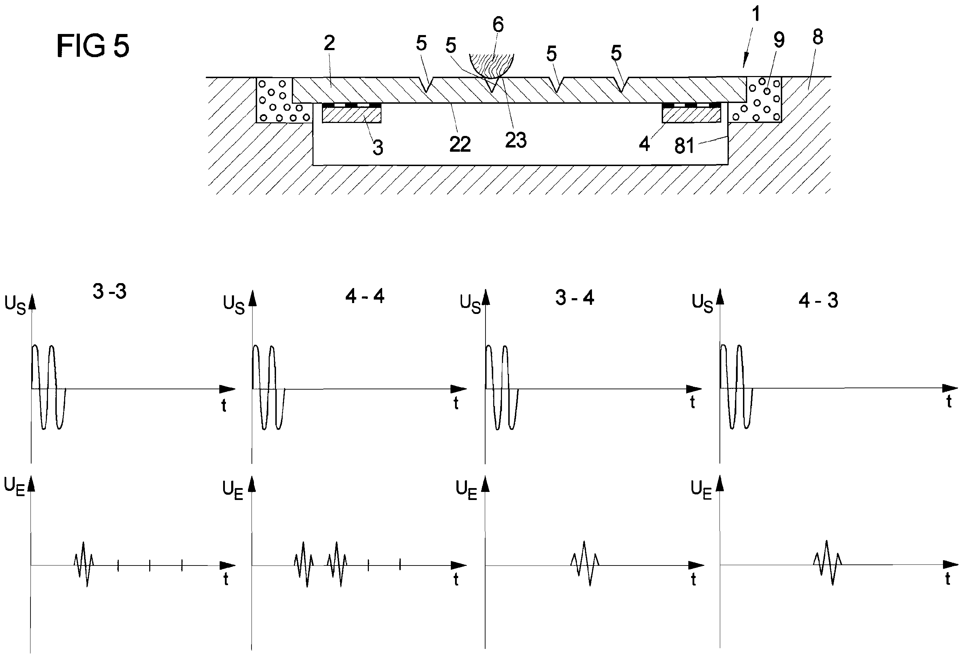

The principle of operation of the touch sensor according to the invention is further illustrated by drawings 3 to 6, wherein Figures 3 to 5 relate to further touch positions and illustrate the corresponding signals at the transmitter-receiver units 3, 4 similarly to Figures 1 and 2. More particularly, Figure 5 illustrates that even if the touch surface 21 is not touched between two reflecting structures 5 but at least partially on one of the reflecting structures 5 still a characteristic signal is generated if the signals at both transmitter-receiver units 3, 4 are evaluated. The combination of both the signal at transmitter-receiver unit 3 and at transmitter-receiver units 4 permits the touch position of Fig. 5 to be distinguished from the touch positions shown in Figures 2 to 4. However, the invention also covers arrangements having, for example, a single transmitter, only. These simpler arrangements still provide a determination of a touch position, wherein, however, the spatial resolution might be lower.

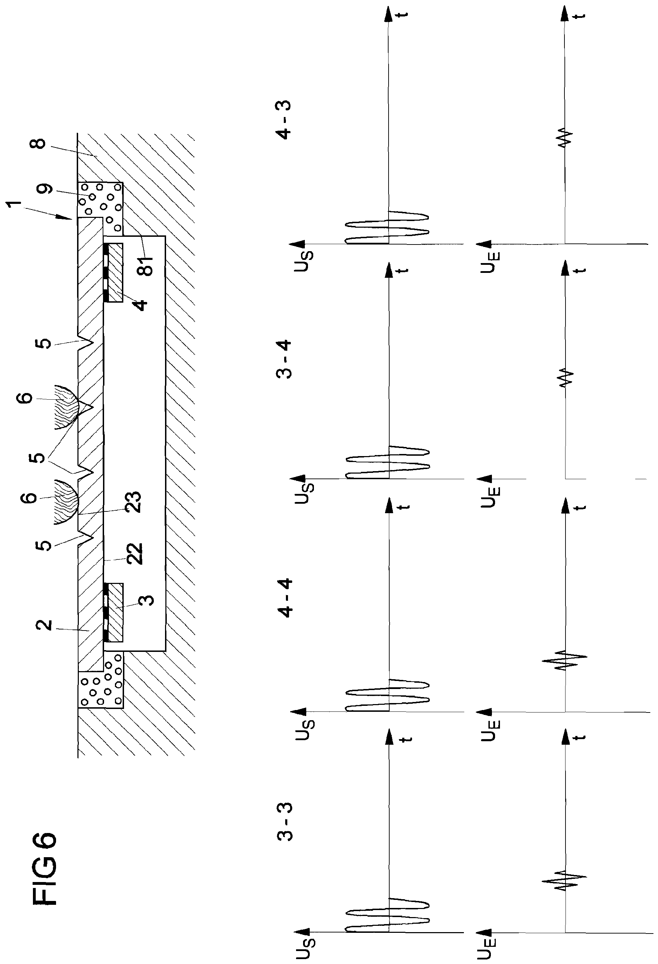

Furthermore, as illustrated in Figure 6, even the positions of two touch contacts at the same time (two finger tips are contacting the touch surface) can be determined using the combination of both signals generated by the transmitter-receiver unit 3 and transmitter-receiver unit 4.

It is noted that it is possible that the receiver signals shown in Figures 1 to 6 (lower graphs) are registered simultaneously, i.e. the left transmitter-receiver unit 3 and the right transmitter-receiver unit 4 emit an acoustic pulse at the same time such that a superposition of the reflected waves and the passed wave may occur at the transmitter-receiver units. However, the passed pulse and the reflected pulses can be distinguished on the basis of the time delay and/or amplitude. It is, however, also possible that the transmitter-receiver units 3, 4 do not excite the acoustic pulse simultaneously but in succession.

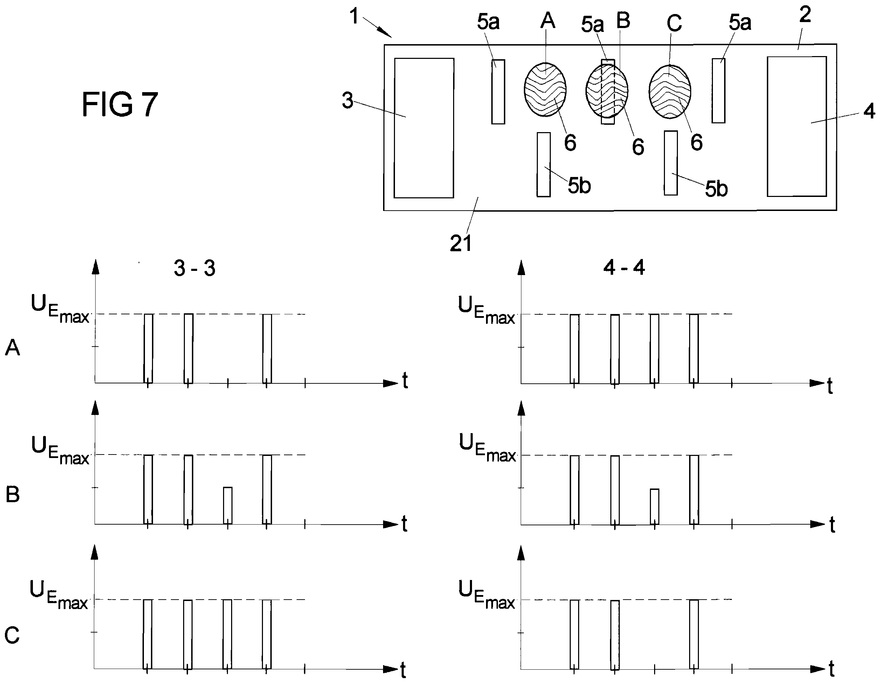

Figure 7 shows a similar touch sensor arrangement as Figures 1 to 6, wherein the touch sensor is shown in top view (without the holder 8).

The substrate comprises reflecting structures (recesses) 5a, 5b which are arranged in an array having a "checker board" layout, i.e. the reflecting structures are arranged in a plurality of rows (two rows in the present example) such that one reflecting structure of one row is arranged essentially in the middle between two reflecting structures of the other row. The distance between two adjacent reflecting structures is nearly constant. Of course, the invention also covers sensor devices having more than two rows and more than three reflecting structures per row.

Figure 7 further illustrates three different touch positions of the finger tip 6, these touch positions being labelled "A","B" and "C". The corresponding signals generated by the (left) transmitter-receiver unit 3 upon receipt of reflected acoustic waves (evoked by acoustic waves excited in the substrate 2 by the transmitter-receiver unit 3 itself) are shown in the left graphs of Figure 7 (labelled "3-3"), wherein the situation at the right transmitter-receiver unit 4 is shown in the right graphs (labelled "4-4").

If the touch surface 21 is touched at the position "A" (between two neighbouring reflecting structures 5a) acoustic waves from the most nearest reflecting structure 5a of the first (upper) row and from both reflecting structures 5b of the second (lower) row of the reflecting array are registered at the transmitter-receiver unit 3. The other reflections, which without the touch contact would occur at the remaining two upper reflecting structures are missing as wave energy is coupled out of the substrate before the surface acoustic wave reach these reflecting structures.

On the other hand, the signal at the right transmitter-receiver unit 4 comprises reflections from the two upper right reflecting structures and both lower reflecting structures 5b such that four signal pulses are generated by the transmitter-receiver unit 4 having essentially the same amplitude U_{Emax}. As explained above with respect to Figures 1 to 6 different touch positions on the touch surface 21 create different characteristic "fingerprints" in the receiver signals such that combining the two receiver signals allows a reliable determination of the position of the touch contact. These "fingerprints" are also illustrated for the touch positions "B" and "C".

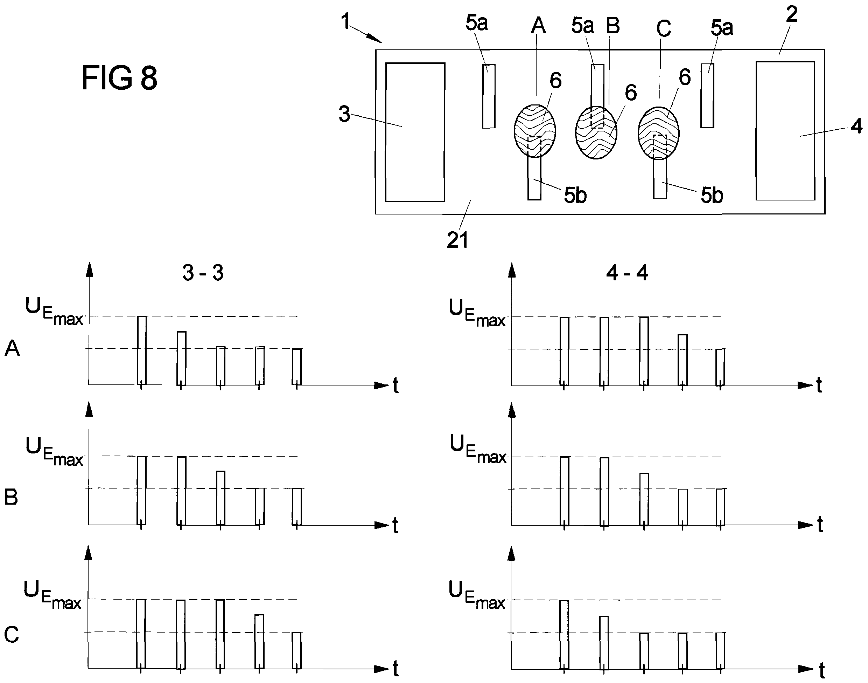

Referring to Figure 8, also intermediate positions between the two rows of reflecting elements 5a, 5b can be determined. These cases (wherein three different finger tip positions are again indicated by "A", "B" and "C") are characterized in that reflection signals resulting from all the reflecting elements 5 occur in the electrical signals of the transmitter-receiver units 3, 4. However, the reflection signals from the reflecting elements 5a, 5b "behind" the finger tip are attenuated due to energy conversion that occurs in the region of the touch contact. Thus, if not only the presence of a reflection pulse is used to determine the touch position but also the amplitude (e.g. the maximum voltage related to a pulse generated by the receiver) of the individual reflection pulse signals, or a combination thereof, also "intermediate" touch positions can be determined, wherein a reflecting structure is only partially covered.

Also, the amplitude of the wave pulse signals could be used to determine an exact position between two reflecting structures such that the spatial resolution that can be realized by the touch sensor is not limited by the distance between two adjacent reflecting structures.

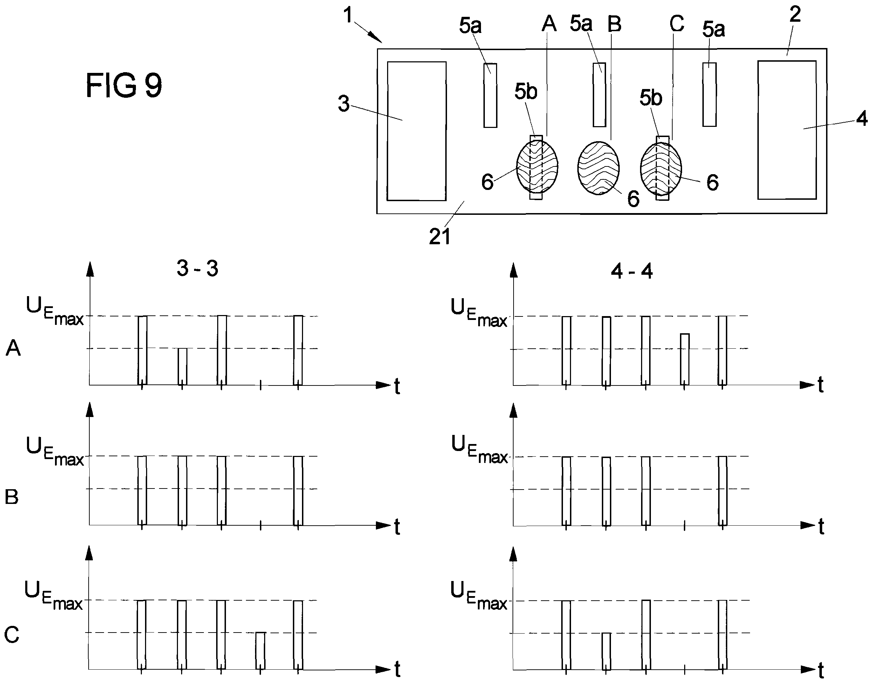

Figure 9 resembles the situation in Figure 7, wherein different receiver signals are illustrated for different touch contacts in the region of the lower row of reflecting structures 5b.

## Claims

1. A touch sensor, comprising:
- a substrate (2) having a touch surface (21) configured to be touched by a user;
- at least one transmitter for exciting acoustic waves in the substrate (2);
- at least one receiver for receiving acoustic waves evoked by the transmitter,
**characterized in that** the touch sensor further comprises:
- a plurality of reflecting structures (5, 5a, 5b) arranged across the touch surface (21) for reflecting acoustic waves excited in the substrate (2); wherein
- the reflecting structures (5, 5a, 5b) and the receiver are arranged relative to one another in such a way that an acoustic wave excited in the substrate (2) by the transmitter is reflected at the reflecting structures toward the receiver, and
- if the touch surface (21) is touched by a body part (6) of the user or a touching means operated by the user at least a part of the acoustic wave energy excited in the substrate (2) is converted into volume sound waves in the body part or the material of the touching means thereby modifying the acoustic waves propagating in the substrate (2); and
- evaluating means configured for determining the position of a touch on the touch surface (21) using a signal generated by the receiver upon receipt of acoustic waves evoked by the transmitter,
and wherein each of the reflecting structures (5, 5a, 5b) is configured to generate a reflected acoustic wave if the touch surface (21) of the substrate (2) is not touched, wherein the evaluating means are configured to detect a touch on a segment (23) of the touch surface (21) between two adjacent reflecting structures (5, 5a, 5b) using the signal generated by the receiver.

2. The touch sensor as claimed in claim 1, **wherein** the transmitter and the receiver are arranged as a common transmitter-receiver unit (3, 4) which is arranged relative to the reflecting structures (5, 5a, 5b) in such a way that an acoustic wave excited by the transmitter-receiver unit (3, 4) impacts essentially perpendicularly on the reflecting structures (5, 5a, 5b) and is reflected back to the transmitter-receiver unit (3, 4).

3. The touch sensor as claimed in claim 2, **wherein** two common transmitter-receiver units (3, 4) are arranged opposite to one another along the propagating direction of the acoustic waves created in the substrate (2) by the transmitter-receiver units (3, 4).

4. The touch sensor as claimed in claim 2 or 3, **wherein** the common transmitter-receiver unit (3, 4) is configured to be operated alternatingly as transmitter and receiver.

5. The touch sensor as claimed in one of the preceding claims, **wherein** the reflecting structures (5, 5a, 5b) are arranged in an array.

6. The touch sensor as claimed in one of the preceding claims, **wherein** the reflecting structures (5, 5a, 5b) extend essentially longitudinally.

7. The touch sensor as claimed in one of the preceding claims, **wherein** the reflecting structures (5, 5a, 5b) extend essentially parallel to one another.

8. The touch sensor as claimed in one of the preceding claims, **wherein** the reflecting structures (5, 5a, 5b) are arranged on the touch surface (21) and/or are formed as recesses of the touch surface (21).

9. The touch sensor as claimed in one of the preceding claims, **wherein** the reflecting structures (5, 5a, 5b) are arranged on a surface of the substrate that faces away from the touch surface (21) and/or are formed as recesses in a surface of the substrate that faces away from the touch surface (21).

10. The touch sensor as claimed in one of the preceding claims, **wherein** the transmitter and the receiver are arranged on a surface (22) of the substrate (2) that faces away from the touch surface (21).

11. The touch sensor as claimed in one of the preceding claims, **wherein**
- the transmitter and the receiver are arranged on a surface (22) of the substrate (2) that faces away from the touch surface (21); and
- the substrate (2) is mounted to a holder (8), wherein
- the holder (8) comprises an opening (81) which receives the transmitter and the receiver.

12. The touch sensor as claimed as claimed in claim 11, **wherein** the substrate (2) is mounted to the holder (8) using an elastic material (9).

13. The touch sensor as claimed in one of the preceding claims, **wherein** the distance between two neighbouring reflecting structures (5, 5a, 5b) is larger than approximately 0.5 cm.

14. The touch sensor as claimed in claim 2, further comprising two
transmitter-receiver units, wherein the reflecting structures (5, 5a, 5b) are arranged between the two transmitter-receiver units.

15. A method for determining a position of a touch, comprising the steps of:
- providing a substrate (2) having a touch surface (21) configured to be touched by a user;
- providing at least one transmitter for exciting acoustic waves in the substrate (2);
- providing a plurality of reflecting structures (5, 5a, 5b) arranged across the touch surface (21), wherein each of the reflecting structures (5, 5a, 5b) is configured to generate a reflected acoustic wave if the touch surface (21) of the substrate (2) is not touched;
- providing at least one receiver for receiving acoustic waves evoked by the transmitter arranged relative to the reflecting structures (5, 5a, 5b) in such a way that an acoustic wave excited in the substrate (2) by the transmitter is reflected at the reflecting structures toward the receiver,
- touching a segment (23) of the touch surface (21) between two adjacent reflecting structures (5, 5a, 5b) by a body part (6) of the user or a touching means operated by the user, thereby converting at least a part of the acoustic wave energy excited in the substrate (2) into volume sound waves in the body part (6) or the material of the touching means and thereby modifying the acoustic waves propagating in the substrate (2);
- determining the position of the touch by evaluating a signal generated by the receiver upon receipt of acoustic waves evoked by the transmitter; and
- determining the segment (23) of the touch surface (21) where the touch took place using the signal generated by the receiver.

## Patentansprüche

1. Berührungssensor, umfassend:
- ein Substrat (2) mit einer Berührungsfläche (21), die dazu ausgelegt ist, von einem Benutzer berührt zu werden;
- mindestens einen Sender zum Anregen von Schallwellen in dem Substrat (2);
- mindestens einen Empfänger zum Empfangen von durch den Sender hervorgerufenen Schallwellen,
**dadurch gekennzeichnet, dass** der Berührungssensor ferner Folgendes umfasst:
- eine Vielzahl von reflektierenden Strukturen (5, 5a, 5b), die über die Berührungsfläche (21) angeordnet sind, um in dem Substrat (2) angeregte Schallwellen zu reflektieren;
- wobei die reflektierenden Strukturen (5, 5a, 5b) und der Empfänger so relativ zueinander angeordnet sind, dass eine durch den Sender in dem Substrat (2) angeregte Schallwelle an den reflektierenden Strukturen zu dem Empfänger hin reflektiert wird, und
- wenn die Berührungsfläche (21) durch ein Körperteil (6) des Benutzers oder ein durch den Benutzer betätigtes Berührungsmittel berührt wird, wenigstens ein Teil der in dem Substrat (2) angeregten Schallwellenenergie in Volumenschallwellen in dem Körperteil oder dem Material des Berührungsmittels umgewandelt wird, wodurch die sich in dem Substrat (2) ausbreitenden Schallwellen modifiziert werden; und
- Auswertemittel, die dazu ausgelegt sind, die Position einer Berührung auf der Berührungsfläche (21) unter Verwendung eines Signals zu ermitteln, das von dem Empfänger beim Empfang von durch den Sender hervorgerufenen Schallwellen erzeugt wurde,
- und wobei jede der reflektierenden Strukturen (5, 5a, 5b) dazu ausgelegt ist, eine reflektierte Schallwelle zu erzeugen, wenn die Berührungsfläche (21) des Substrats (2) nicht berührt wird, wobei die Auswertemittel dazu ausgelegt sind, eine Berührung auf einem Segment (23) der Berührungsfläche (21) zwischen zwei benachbarten reflektierenden Strukturen (5, 5a, 5b) unter Verwendung des von dem Empfänger erzeugten Signals zu erfassen.

2. Berührungssensor nach Anspruch 1, **wobei** der Sender und der Empfänger als eine gemeinsame Sender-Empfänger-Einheit (3, 4) angeordnet sind, die so relativ zu den reflektierenden Strukturen (5, 5a, 5b) angeordnet ist, dass eine durch die Sender-Empfänger-Einheit (3, 4) angeregte Schallwelle im Wesentlichen senkrecht auf die reflektierenden Strukturen (5, 5a, 5b) auftrifft und zu der Sender-Empfänger-Einheit (3, 4) zurückreflektiert wird.

3. Berührungssensor nach Anspruch 2, **wobei** zwei gemeinsame Sender-Empfänger-Einheiten (3, 4) entlang der Ausbreitungsrichtung der durch die Sender-Empfänger-Einheiten (3, 4) in dem Substrat (2) erzeugten Schallwellen einander gegenüberliegend angeordnet sind.

4. Berührungssensor nach Anspruch 2 oder 3, **wobei** die gemeinsame Sender-Empfänger-Einheit (3, 4) dazu ausgelegt ist, abwechselnd als Sender und Empfänger betrieben zu werden.

5. Berührungssensor nach einem der vorhergehenden Ansprüche, **wobei** die reflektierenden Strukturen (5, 5a, 5b) in einem Array angeordnet sind.

6. Berührungssensor nach einem der vorhergehenden Ansprüche, **wobei** sich die reflektierenden Strukturen (5, 5a, 5b) im Wesentlichen in Längsrichtung erstrecken.

7. Berührungssensor nach einem der vorhergehenden Ansprüche, **wobei** sich die reflektierenden Strukturen (5, 5a, 5b) im Wesentlichen parallel zueinander erstrecken.

8. Berührungssensor nach einem der vorhergehenden Ansprüche, **wobei** die reflektierenden Strukturen (5, 5a, 5b) auf der Berührungsfläche (21) angeordnet sind und/oder als Ausnehmungen der Berührungsfläche (21) ausgebildet sind.

9. Berührungssensor nach einem der vorhergehenden Ansprüche, **wobei** die reflektierenden Strukturen (5, 5a, 5b) auf einer von der Berührungsfläche (21) abgewandten Oberfläche des Substrats angeordnet sind und/oder als Ausnehmungen in einer von der Berührungsfläche (21) abgewandten Oberfläche des Substrats ausgebildet sind.

10. Berührungssensor nach einem der vorhergehenden Ansprüche, **wobei** der Sender und der Empfänger auf einer von der Berührungsfläche (21) abgewandten Oberfläche (22) des Substrats (2) angeordnet sind.

11. Berührungssensor nach einem der vorhergehenden Ansprüche, **wobei**
- der Sender und der Empfänger auf einer von der Berührungsfläche (21) abgewandten Oberfläche (22) des Substrats (2) angeordnet sind; und
- das Substrat (2) an einer Halterung (8) befestigt ist, wobei
- die Halterung (8) eine Öffnung (81) umfasst, die den Sender und den Empfänger aufnimmt.

12. Berührungssensor nach Anspruch 11, **wobei** das Substrat (2) mit einem elastischen Material (9) an der Halterung (8) befestigt ist.

13. Berührungssensor nach einem der vorhergehenden Ansprüche, **wobei** der Abstand zwischen zwei benachbarten reflektierenden Strukturen (5, 5a, 5b) größer ist als ungefähr 0,5 cm.

14. Berührungssensor nach Anspruch 2, ferner umfassend zwei Sender-Empfänger-Einheiten, wobei die reflektierenden Strukturen (5, 5a, 5b) zwischen den zwei Sender-Empfänger-Einheiten angeordnet sind.

15. Verfahren zur Ermittlung der Position einer Berührung, mit den folgenden Schritten:
- Bereitstellen eines Substrats (2) mit einer Berührungsfläche (21), die dazu ausgelegt ist, von einem Benutzer berührt zu werden;
- Bereitstellen mindestens eines Senders zum Anregen von Schallwellen in dem Substrat (2);
- Bereitstellen einer Vielzahl von reflektierenden Strukturen (5, 5a, 5b), die über die Berührungsfläche (21) angeordnet sind, wobei jede der reflektierenden Strukturen (5, 5a, 5b) dazu ausgelegt ist, eine reflektierte Schallwelle zu erzeugen, wenn die Berührungsfläche (21) des Substrats (2) nicht berührt wird;
- Bereitstellen mindestens eines Empfängers zum Empfangen von durch den Sender hervorgerufenen Schallwellen, der so zu den reflektierenden Strukturen (5, 5a, 5b) angeordnet ist, dass eine durch den Sender in dem Substrat (2) angeregte Schallwelle an den reflektierenden Strukturen zu dem Empfänger hin reflektiert wird;
- Berühren eines Segments (23) der Berührungsfläche (21) zwischen zwei benachbarten reflektierenden Strukturen (5, 5a, 5b) mit einem Körperteil (6) des Benutzers oder einem durch den Benutzer betätigten Berührungsmittel, wodurch wenigstens ein Teil der in dem Substrat (2) angeregten Schallwellenenergie in Volumenschallwellen in dem Körperteil (6) oder dem Material des Berührungsmittels umgewandelt wird und dadurch die sich in dem Substrat (2) ausbreitenden Schallwellen modifiziert werden;
- Ermitteln der Position der Berührung durch Auswerten eines von dem Empfänger beim Empfang von durch den Sender hervorgerufenen Schallwellen erzeugten Signals; und
- Ermitteln des Segments (23) der Berührungsfläche (21), wo die Berührung stattgefunden hat, unter Verwendung des von dem Empfänger erzeugten Signals.

## Revendications

1. Capteur tactile comprenant :
- un substrat (2) ayant une surface tactile (21) configurée pour être touchée par un utilisateur ;
- au moins un émetteur pour exciter des ondes acoustiques dans le substrat (2) ;
- au moins un récepteur pour recevoir des ondes acoustiques provoquées par l'émetteur,
**caractérisé en ce que** le capteur tactile comprend en outre :
- une pluralité de structures réfléchissantes (5, 5a, 5b) agencées à travers la surface tactile (21) pour réfléchir des ondes acoustiques excitées dans le substrat (2) ; dans lequel
- les structures réfléchissantes (5, 5a, 5b) et le récepteur sont agencés réciproquement de manière qu'une onde acoustique excitée dans le substrat (2) par l'émetteur soit réfléchie au niveau des structures réfléchissantes vers le récepteur, et
- si la surface tactile (21) est touchée par une partie du corps (6) de l'utilisateur ou un moyen de toucher actionné par l'utilisateur, au moins une partie de l'énergie d'onde acoustique excitée dans le substrat (2) est convertie en ondes sonores de volume dans la partie du corps ou le matériau des moyens de toucher en modifiant ainsi les ondes acoustiques se propageant dans le substrat (2) ; et
- des moyens d'évaluation configurés pour déterminer la position d'un toucher sur la surface tactile (21) en utilisant un signal généré par le récepteur à la réception d'ondes acoustiques provoquées par l'émetteur,
et dans lequel
chacune des structures réfléchissantes (5, 5a, 5b) est configurée pour générer une onde acoustique réfléchie si la surface tactile (21) du substrat (2) n'est pas touchée, dans lequel les moyens d'évaluation sont configurés pour détecter un toucher sur un segment (23) de la surface tactile (21) entre deux structures réfléchissantes adjacentes (5, 5a, 5b) en utilisant le signal généré par le récepteur.

2. Capteur tactile selon la revendication 1, dans lequel l'émetteur et le récepteur sont agencés comme une unité d'émetteur-récepteur commun (3, 4) qui est agencée par rapport aux structures réfléchissantes (5, 5a, 5b) de manière qu'une onde acoustique excitée par l'unité d'émetteur-récepteur (3, 4) heurte sensiblement perpendiculairement les structures réfléchissantes (5, 5a, 5b) et soit réfléchie en retour vers l'unité d'émetteur-récepteur (3, 4).

3. Capteur tactile selon la revendication 2, dans lequel deux unités d'émetteur-récepteur commun (3, 4) sont agencées l'une opposée à l'autre suivant la direction de propagation des ondes acoustiques générées dans le substrat (2) par les unités d'émetteur-récepteur (3,4).

4. Capteur tactile selon la revendication 2 ou 3, dans lequel l'unité d'émetteur-récepteur commun (3, 4) est configurée pour être utilisée en alternance comme émetteur et récepteur.

5. Capteur tactile selon une des revendications précédentes, dans lequel les structures réfléchissantes (5, 5a, 5b) sont agencées en un réseau.

6. Capteur tactile selon une des revendications précédentes, dans lequel les structures réfléchissantes (5, 5a, 5b) s'étendent sensiblement longitudinalement.

7. Capteur tactile selon une des revendications précédentes, dans lequel les structures réfléchissantes (5, 5a, 5b) s'étendent sensiblement parallèles les unes aux autres.

8. Capteur tactile selon une des revendications précédentes, dans lequel les structures réfléchissantes (5, 5a, 5b) sont agencées sur la surface tactile (21) et/ou sont formées comme des évidements de la surface tactile (21).

9. Capteur tactile selon une des revendications précédentes, dans lequel les structures réfléchissantes (5, 5a, 5b) sont agencées sur une surface du substrat qui est du côté opposé à la surface tactile (21) et/ou sont formées comme des évidements dans une surface du substrat qui est du côté opposé à la surface tactile (21).

10. Capteur tactile selon une des revendications précédentes, dans lequel l'émetteur et le récepteur sont agencés sur une surface (22) du substrat (2) qui est du côté opposé à la surface tactile (21).

11. Capteur tactile selon une des revendications précédentes, dans lequel
- l'émetteur et le récepteur sont agencés sur une surface (22) du substrat (2) qui est du côté opposé à la surface tactile (21) ; et
- le substrat (2) est monté sur un support (8), dans lequel
- le support (8) comprend une ouverture (81) qui reçoit l'émetteur et le récepteur.

12. Capteur tactile selon la revendication 11, dans lequel le substrat (2) est monté sur le support (8) en utilisant un matériau élastique (9).

13. Capteur tactile selon une des revendications précédentes, dans lequel la distance entre deux structures réfléchissantes voisines (5, 5a, 5b) est supérieure à approximativement 0,5 cm.

14. Capteur tactile selon la revendication 2, comprenant en outre deux unités d'émetteur-récepteur, dans lequel les structures réfléchissantes (5, 5a, 5b) sont agencées entre les deux unités d'émetteur-récepteur.

15. Procédé pour déterminer une position d'un toucher, comprenant les étapes suivantes :
- la fourniture d'un substrat (2) ayant une surface tactile (21) configurée pour être touchée par un utilisateur ;
- la fourniture d'au moins un émetteur pour exciter des ondes acoustiques dans le substrat (2) ;
- la fourniture d'une pluralité de structures réfléchissantes (5, 5a, 5b) agencées à travers la surface tactile (21), dans lequel chacune des structures réfléchissantes (5, 5a, 5b) est configurée pour générer une onde acoustique réfléchie si la surface tactile (21) du substrat (2) n'est pas touchée ;
- la fourniture d'au moins un récepteur pour recevoir des ondes acoustiques provoquées par l'émetteur agencé par rapport aux structures réfléchissantes (5, 5a, 5b) de manière qu'une onde acoustique excitée dans le substrat (2) par l'émetteur soit réfléchie au niveau des structures réfléchissantes vers le récepteur,
- le toucher d'un segment (23) de la surface tactile (21) entre deux structures réfléchissantes adjacentes (5, 5a, 5b) par une partie du corps (6) de l'utilisateur ou un moyen de toucher actionné par l'utilisateur, en convertissant au moins une partie de l'énergie d'onde acoustique excitée dans le substrat (2) en ondes sonores de volume dans la partie du corps (6) ou le matériau des moyens de toucher et en modifiant ainsi les ondes acoustiques se propageant dans le substrat (2) ;
- la détermination de la position du toucher en évaluant un signal généré par le récepteur à la réception d'ondes acoustiques provoquées par l'émetteur ; et
- la détermination du segment (23) de la surface tactile (21) où le toucher se produit en utilisant le signal généré par le récepteur.
